# EUROPEAN PATENT APPLICATION

(11) **EP 1 938 773 A1**
(43) Date of publication of application: **02.07.2008**
(21) Application number: 06425882.5
(22) Date of filing: 29.12.2006
(51) Int. Cl.: A61C 19/06

(54) **Intraoral device**

(71) Applicant: Quattroti Dentech S.r.l., 22070 Rovello Porro (Como) (IT)
(72) Inventor: Turchetti, Mauro, 22070 Rovello Porro (Como) (IT)
(74) Representative: Ponzellini, Gianmarco

(57) **Abstract**

A teeth bleaching device, characterised in that it comprises:
- a support having at least two cavities confined by respective side walls and a common base wall, said cavities facing away from said base wall and being designed to receive respective dental arches of a user; at least one, and preferably each of said cavities being provided with a plurality of pits each of which is designed to house a single tooth of the user; at least one, and preferably each of said cavities being further designed to be filled at least partly with a predetermined amount of a bleaching product;
- a seat intended for support of means for promoting the bleaching action of said bleaching product, said seat being delimited by a closed side wall and a bottom wall and being accessible at least from one front portion of the support; said bottom wall stopping at least one fluid communication between said cavity and seat.

## Description

The present invention relates to a method of teeth bleaching. In more detail, the present invention applies to the field of cosmetic treatments aiming at improving the aesthetic teeth qualities.

It is known that one of the most used processes for teeth bleaching is obtained through application of a bleaching or whitening product to the teeth themselves, which product is generally in the form of a paste or a gel and is then possibly impinged on by a light beam in such a manner that the bleaching action of the product is improved.

Application of the bleaching product to the teeth generally takes place through use of a suitable intraoral support (template) having a cavity designed to house a dental arch of a user to be submitted to a bleaching treatment.

Up to now the best treatment for teeth bleaching is obtained by use of individual templates directly made by the dentist using the impressions of both dental arches of the patient.

Making individual templates allows achievement of a close coupling between the inner surface of the template itself and the exposed surface of the teeth.

Due to the close matching between the shape of the intraoral device and the shape of the dental arch, the treatment effects are maximised because the gel is directly and fully in contact with the tooth surface during the whole treatment period. In addition, a close contact prevents phenomena of dispersion of the bleaching product and gel pollution due to saliva, for example.

The problems connected with the methods briefly described above mainly result from the fact that both the user and dentist are forced to carry out the different operations mentioned above during the sitting and in an individual and distinctive manner. The above involves high costs and is time-consuming, which will have negative effects on the patient.

To obviate the above mentioned limitations at least partly, there are presently on the market templates (susceptible of being thermoformed or not) that have a standardised conformation and a substantially U-shaped extension.

However with this type of templates the treatment effects are greatly worsened. In fact, this conformation is not able to ensure the close contact between the inner walls of the template and the teeth surface that is on the contrary present in individual and personalised templates prepared by the dentist.

In addition, the supports of known type have standard conformations, i.e. they can be found on the market in different preestablished formats which only correspond to some limited sizes and conformations of possible users, substantially for the purpose of meeting production and storage requirements. Disadvantageously, this adversely affects not only the bleaching treatment efficiency, but also the users' comfort for whom said support are intended. In fact, said business choice of only providing some standard formats of the intraoral supports does not allow a correct coupling between the supports themselves and the users' dental arches, giving rise to a feeling of discomfort on the part of the users, and in addition does not enable correct application of the bleaching product to the teeth, which will involve partial or full inefficiency of the bleaching treatment.

Therefore, it is still unresolved the requirement of making available a method and a device for teeth bleaching that simultaneously enables manufacture of personalised templates and a process adapted to be industrialised.

Accordingly, it is a technical task of the present invention to make available a method of teeth bleaching that is free of the above mentioned drawbacks.

Within the scope of this technical task, it is an important aim of the invention to propose a method of teeth bleaching requiring a short execution time.

The invention also aims of making available a method of teeth bleaching maximising the users' comfort when they are submitted to a treatment for teeth bleaching.

It is a further aim of the invention to make available a method of teeth bleaching offering an optimal production efficiency.

The foregoing and further aims that will become more apparent in the following of the present description are substantially achieved by a method of teeth bleaching having the features set out in claims 1 and/or in one or more of claims 2 to 8.

According to a further object of the invention it is proposed a device for teeth bleaching in accordance with the features set out in claim 9.

A preferred but not exclusive embodiment of a method of teeth bleaching in accordance with the accompanying drawings is given hereinafter by way of non-limiting example. In the drawings:
- Fig. 1 is a top plan view of a first portion of a device for teeth bleaching in accordance with the invention and with reference to a first production form;
- Fig. 2 is a bottom plan view of the first portion seen in Fig. 1 ;
- Figs. 3 and 4 show a rear and a front view respectively of the first portion seen in Fig. 1;
- Figs. 5a, 10 and 5b show a first and a second plan view and a side view sectioned along line B-B in Fig. 5a respectively, of two possible second portions susceptible of being associated with the first portion in accordance with the preceding figures, of a device for teeth bleaching according to the invention;
- Figs. 6 and 7 are plan representations of the upper and lower dental arches of an individual with whom the different portions of the device shown in the preceding figures are associated;
- Figs. 8 and 9 are two plan views, from bottom and top respectively, of a device for teeth bleaching in accordance with the invention and in a second embodiment.

According to the figures of the accompanying drawings, a device for teeth bleaching in accordance with the invention is generally denoted at 1.

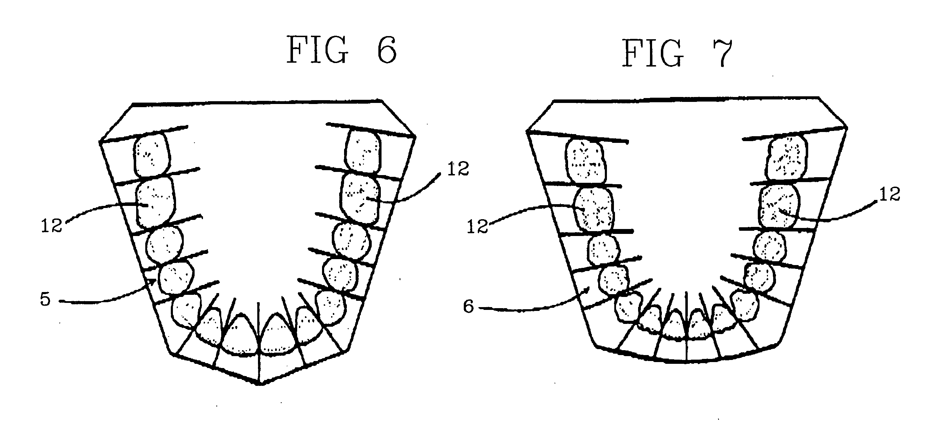

Device 1 comprises a support 1a of curved shape and preferably with a U-shaped conformation, made of thermoplastic material (ethylene - vinylacetate copolymer) having two cavities 2s, 2i for receiving corresponding upper and lower dental arches 5, 6 of a user, shown in Figs. 6 and 7.

Cavities 2s and 2i are superposed on each other and delimited by substantially vertical side walls 3 connected by an intermediate base wall, transverse thereto.

The side walls 3 are shaped towards the inside of cavities 2s and 2i with a profile mating the envelope of the average crown surface of the natural teeth of a statistically predetermined assembly of individuals.

The side walls 3 are such shaped as to show a plurality of opposite arches 31 by pairs, defining a plurality of pits 7 in combination with the base wall 4, each of said pits 7 being designed to house an individual tooth of one of said dental arches 5, 6. Pits 7 of the two cavities 2s, 2i are therefore carried by the base surface 4 at opposite surfaces of the base wall 4 itself.

Each arch 31 has a concavity facing the corresponding cavity 2s, 2i, to surround a side portion of a corresponding tooth of the user. Arches 31 are disposed in mutual continuous succession, so that cavities 2s, 2i have lengths of reduced width corresponding to junctions between consecutive arches 31 and lengths of increased width corresponding to central portions of said arches 31. As a result, the side walls 3 have a varying thickness included between a maximum thickness located at the junction between two consecutive arches 31 and a minimum thickness located close to the central portion of each arch 31.

Advantageously, the minimum-distance lengths can come into engagement with the interstices between two consecutive teeth, for getting stuck into the interstices themselves and cause steady positioning of the support 1a relative to the dental arches 5, 6.

Advantageously, the pits 7 associated with one of said cavities 2s, 2i are offset relative to the pits 7 of the other cavity 2s, 2i along an extension of the support 1a, preferably according to a corresponding relative position relationship of the teeth of each arch 5, 6 that corresponds to the anatomic condition of the lower jaw in the rest position.

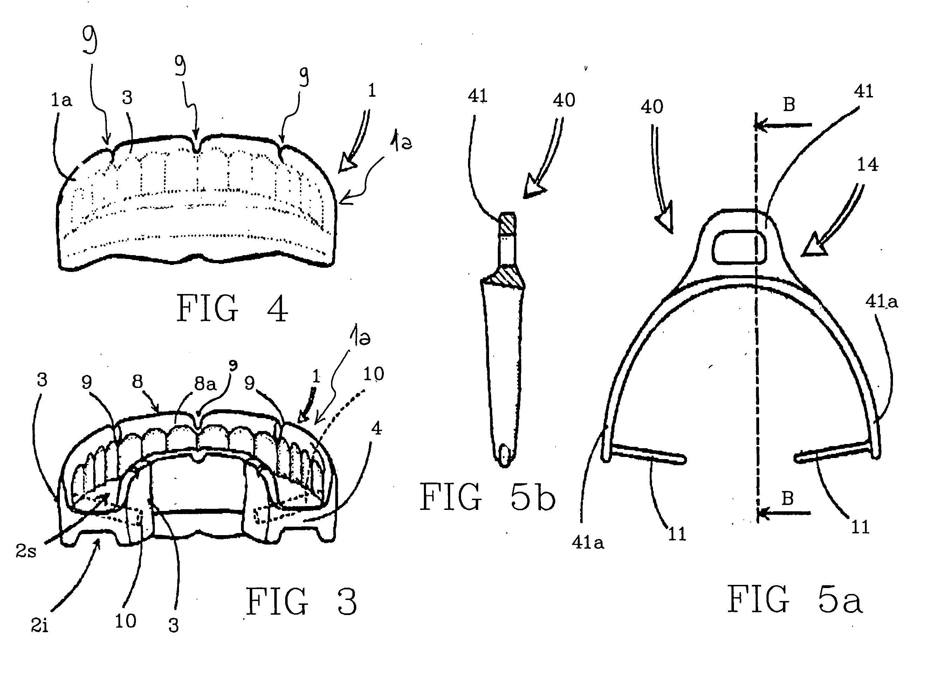

The side walls 3 of cavities 2s, 2i have smoothed end edges 8 which are provided with surfaces 8a mating the average gum surface of a predetermined assembly of individuals. Said end edges 8 have interruption regions 9, clearly shown in Figs. 3 and 4, which are conveniently shaped and positioned at the frenula and at the discharge area 9f of the palate papilla behind the incisor teeth, so as to avoid all likelihood of anatomic interference when device 1 is applied to the user's dental arches 5, 6.

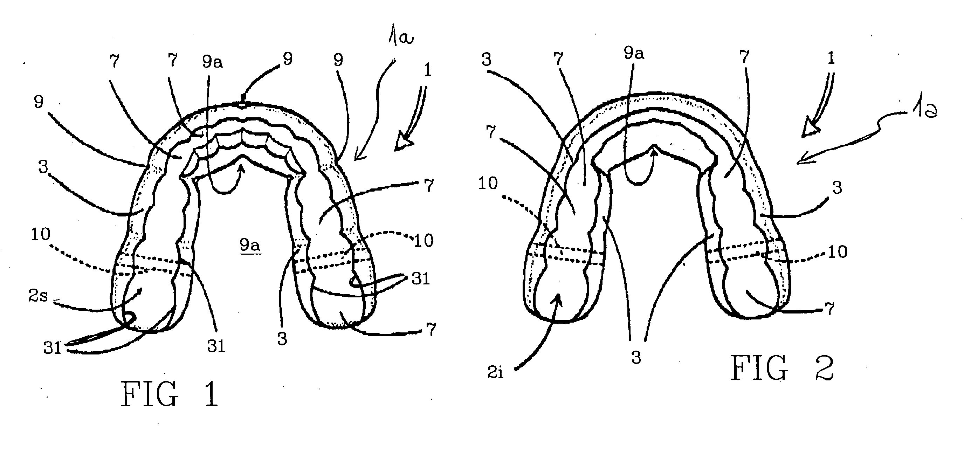

With reference to Figs. 1 to 3, close to location of the first molars 12 of each of the two dental arches 5, 6, the support 1a has two through holes 10 crossing the thickness of the base wall 4 of the support 1a itself at the two sides of the user's mouth. These holes 10, as will be better understood in the following, are provided to perform an important function in the control of the occlusal thickness of device 1.

Device 1 is further provided with a control device 40 of the thickness of the base wall 4 corresponding to the desired occlusal space between the user's dental arches 5, 6 (Figs. 5a, 5b).

It is apparent that in some types of application the presence of holes 10 to enable thickness control can be omitted.

This control device 40 comprises an arch-shaped grasp element 14 having a central small handgrip 41 and carrying two rectilinear bar-shaped spacer elements 11 for steady engagement into said through holes 10. The through holes 10, that are coplanar to the grasp element 14, are located at opposite ends 41a of the grasp element 14 itself, and project towards each other inside the arch defined by the grasp element 14. The size of the spacer elements 11 corresponds to that of the through holes 10 of the side wall 3 and said elements are located at the first molars 12 when the grasp element 14 is mounted on support 1a.

The control device 40 is made of elastically flexible plastic material 15, preferably a thermoplastic polyoxymethylene technopolymer (POM) enabling the arch defined by the support element 14 to be manually widened by the user for insertion and removal of the two spacer elements 11 into a from the corresponding through holes 10 of support 1a, which are located at the first molars 12.

After coupling between the control device 40 and support 1a, the control device 40 is elastically disposed around the support 1a and surrounds the outermost side wall 3 of each cavity 2s, 2i, ultimately enabling gripping and retention of device 1 by merely clenching the small handgrip 41 of the control device 40 with two fingers.

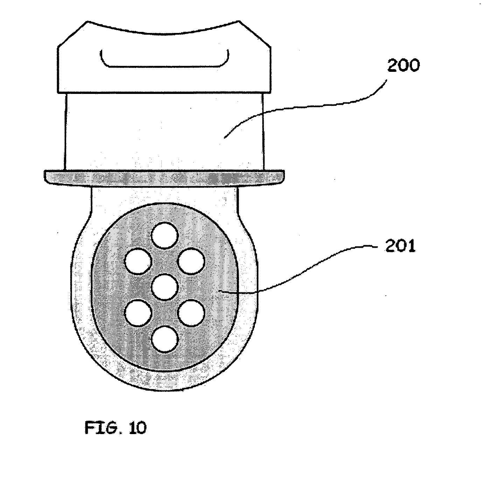

Alternatively, control devices 40 of different shape and nature can be provided, such as an insert of plastic material adapted to be coupled with cavity 102 and having a jutting out grasp element 200 to support the device during the heating step preceding final personalisation (Fig. 10).

The insert 201 also performs the function of maintaining the geometric configuration of the cavity 102 to enable subsequent insertion of the means promoting the bleaching action of the gel (as better clarified in the following).

To personalise device 1 in a manner exactly corresponding to the user's dental, labial, palatal and gingival anatomy it is sufficient:
- to dip device 1 into boiling water over a time sufficient to produce softening of the thermoplastic material of which support 1a is made;
- to associate the cavities 2s, 2i of support 1a with the user's dental arches 5, 6 taking care to introduce one tooth into each pit 7;
- to mutually tighten the dental arches 5, 6 to the closed position of the lower jaw while device 1 is still in a malleable state, so as to give each cavity 2s, 2i or at least the base wall 4 a shape that at least partly and preferably fully matches the shape of the corresponding dental arch 5, 6 of the user.

During the dipping step, device 1 can be advantageously supported by means of the handgrip 41 of the control device 40.

Following a cooling step, the thermoplastic material of support 1a has a tendency to stably keep the conformation taken following the tightening step of the user's teeth. Advantageously, in addition, repetition of said steps would be sufficient to make support 1a malleable again so as to modify the conformation of same another time.

The preceding steps to be carried out for personalisation of device 1 are intended on a device 1 in which cavities 2s, 2i are already provided with the plurality of pits 7. The latter that are already present in the support 1a ready to be stably deformed, are made during preceding production steps of device 1 which are not the object of the present invention. In the present treatment instead, reference is made to the steps to which the support 1a of thermoplastic material is to be submitted to give the same a conformation matching the shape of the user's dental arches 5, 6, in order to maximise the user's comfort during application of support 1a.

In addition, if the spacer elements 11 carried by the arch of the support element 14 are present, a possible overtightening of the teeth during said personalisation step is prevented from causing an excessive reduction in the thickness of the occlusal pad formed by the base wall 4.

Advantageously, the method of the invention comprises a step of filling at least one and preferably each of the cavities 2s, 2i at least partly with a predetermined amount of a bleaching material, which generally takes either a semi-liquid or a pasty state, or the state of a gel.

This filling step is then followed by a step of applying the support 1a, at least partly filled with a bleaching product, to the user's dental arches 5, 6. The particular conformation taken by the cavities 2s, 2i following the hot personalisation step therefore enables the support 1a thus applied to distribute the bleaching product on the user's teeth in a correct and uniform manner, while at the same time the user does not suffer pain and/or discomfort due to the absence of differences in shape between the cavities 2s, 2i and the user's dental arches 5, 6.

In the preferred construction embodiment of the method of the invention, therefore, the sequence of the main operating steps comprises, in the order, a step of heating the support 1a to make it plastic, a step of applying the support to the user's dental arches to give the support 1a the desired shape, a step of removing the support 1a, a step of filling one or both cavities 2s, 2i at least partly with the bleaching product and a step of applying the support 1a containing the bleaching product to the user's dental arches 5, 6.

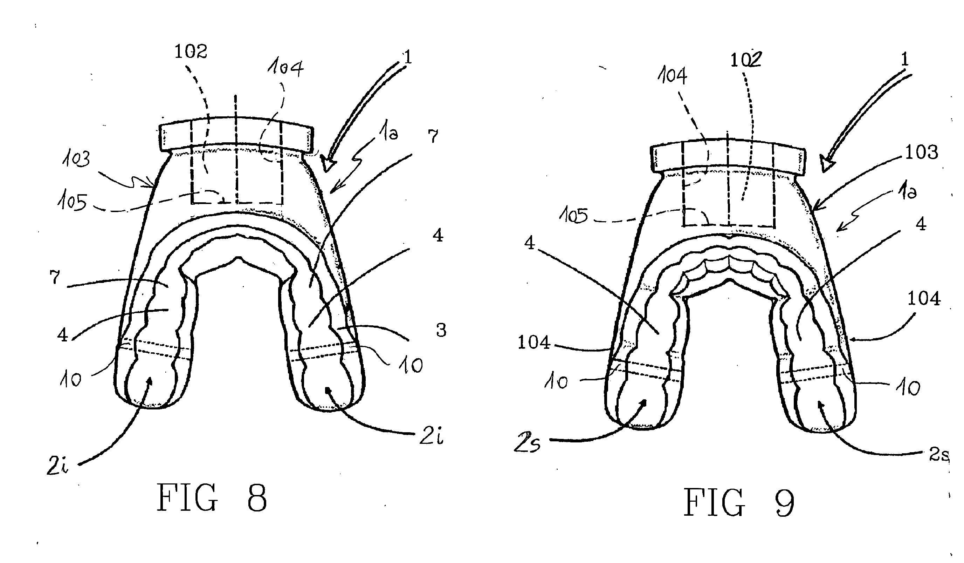

According to an alternative production form of the invention, in accordance with Figs. 8 and 9, the support 1a has a seat 102 to be stably engaged with means adapted to promote the bleaching action of said bleaching product. This means, not shown, preferably comprises an ultrasonic wave source or a catalysing-light source. In both cases, the action of said means is addressed to cavities 2s, 2i, i.e. to the portions of support 1a containing the bleaching product.

Preferably, said means for promoting the bleaching action acts after the step of applying the support 1a containing the bleaching product to the user's dental arches 5, 6.

Preferably, in addition, said means for promoting the bleaching action is stably applied to support 1a after the step of applying the support 1a itself containing the bleaching product to the user's dental arches 5, 6.

In the embodiment shown in Figs. 8 and 9, support 1a has a front protrusion 103 defined by a preferably closed curved wall 104 internally delimiting said seat 102. The curved wall 104 is preferably cylindrical and projects from a remaining portion of support 1a.

Seat 102 is at least accessible from a front portion of support 1a. In more detail, seat 102 is accessible from a portion of the front protrusion 103 opposite to the remaining portion of support 1a, i.e. a portion of the front protrusion 103 facing away from cavities 2s, 2i. In this way, by inserting said means for promoting the bleaching action of the bleaching product into the seat 102, this means generates a catalysing-light beam or an ultrasonic or subsonic wave beam turned towards cavities 2s, 2i and therefore in the same direction and the same way as the direction and way of insertion of the means into the seat 102.

Preferably, the front protrusion 103 internally has a bottom wall 105 that delimits said seat 102 on one side and prevents at least one fluid communication between the seat 102 and one or both cavities 2s, 2i to avoid escape of the bleaching product through the seat 102 itself. Preferably, therefore, the bottom wall 105 is not provided with through openings. The bottom wall 105 is preferably positioned in a portion of the front protrusion 103 opposite to an access portion of said seat 102.

In case of use of a catalysing light as the means to promote the bleaching action of the bleaching product, said bottom wall 105 is transparent at least to said catalysing light.

For construction reasons the support 1a is fully made of only one material, i.e. said thermoplastic material.

Advantageously, a device of the above described type and in particular having said hot-plasticity features enabling adaptation of same to the conformation of the dental arches of any user, if produced with the occlusal plane made of a slightly stiffer material can be also used as a bite device to counteract and protect teeth from the bruxism effects (grinding, gnashing or tightening of the teeth during sleep).

In addition, a device of the above described type can also be used as a snoring-preventing device.

The present invention achieves the intended purposes overcoming the drawbacks present in the known art.

The described method and device first of all enable an article to be obtained that adapts itself to the dental arches of the individual patients and at the same time is produced with an industrial method offering reduced costs and times.

It is in fact to be pointed out that the presence of two opposite cavities on the same support enables both the dental arches of a user to be simultaneously treated and bleached, with the possibility however of treating only one of the two arches if one alone of the two cavities is previously filled with the bleaching product. As a result there is a reduction in the treatment time, said treatment taking place in a single passage on both dental arches and not in two consecutive passages.

In addition, since the device is made of thermoplastic material, a step of personalising the support can be carried out so as to obtain cavities the shape of which matches the corresponding shape of the user's dental arches.

In addition, due to the personalisation step, more comfort for the user is obtained due to the absence of regions in which differences between the cavities and the dental arches are present, which is advantageous for easy and quick application of the support to said dental arches.

It will be also recognised that a method of teeth bleaching in accordance with the invention allows a reduction in the number of standard formats required for treating a predetermined number of individuals, since generation of a correct conformation of the cavities and pits relies on the personalisation step.

## Claims

1. A method of teeth bleaching, **characterised in that** it comprises the steps of:
- providing a support having at least one cavity confined by respective side walls and a base wall, said cavity being designed to receive one dental arch of a user and being provided with a plurality of pits, each of said pits being designed to house a single tooth of the user;
- filling at least one, and preferably each of said cavities at least partly with a predetermined amount of a bleaching product;
- applying said support containing said bleaching product to the dental arches of a user in such a manner as to house at least part of each dental arch inside a corresponding cavity of the support.

2. A method as claimed in claim 1, **characterised in that** the step of providing said support comprises the step of providing a support having at least two cavities delimited by respective side walls and by a common base wall, said cavities facing away from said base wall and being designed to receive respective dental arches of a user.

3. A method as claimed in claim 2, **characterised in that** it comprises a step of stably deforming, preferably by hot deformation, said support having said pits to give said cavities a shape at least partly matching that of the user's teeth.

4. A method as claimed in claim 3, **characterised in that** said step of hot deforming said support comprises a step of heating said support and a subsequent step of positioning said heated support between the user's dental arches to obtain a permanent deformation at least of the base wall following a tightening action of the dental arches by the user itself.

5. A method as claimed in claim 3 or 4, **characterised in that** said step of hot deforming said support takes place before the step of filling said cavities of the support with the bleaching product.

6. A method as claimed in claim 4 or 5, **characterised in that**, before the step of hot deforming said support, it comprises a step of applying at least one spacer element to said base wall to determine maximum approaching between the user's dental arches during the step of hot deforming said support; preferably, the step of applying said spacer element comprising a step of positioning said spacer element at a pit suitable for engagement with one of the user's first molars.

7. A method as claimed in anyone of the preceding claims, **characterised in that**, before the step of applying said support to the user's dental arches, it comprises a step of applying a removable grasp element with a handgrip to said support, to enable practical and steady gripping of the support while excluding a direct contact with the support itself; preferably, the step of applying said grasp element to the support comprising a step of stably applying at least one portion of said grasp element to the base wall of said support to stably associate the grasp element with the support, said portion of the grasp element defining said spacer element.

8. A method as claimed in anyone of the preceding claims, **characterised in that** it comprises a step of stably coupling means for promoting the bleaching action of said bleaching product to said support, preferably to a front portion thereof; preferably said means for promoting the bleaching action comprising either ultrasonic wave means or means for generating a catalysing light.

9. A teeth bleaching device, **characterised in that** it comprises:
- a support having at least two cavities confined by respective side walls and a common base wall, said cavities facing away from said base wall and being designed to receive respective dental arches of a user; at least one, and preferably each of said cavities being provided with a plurality of pits each of which is designed to house a single tooth of the user; at least one, and preferably each of said cavities being further designed to be filled at least partly with a predetermined amount of a bleaching product;
- a seat intended for support of means for promoting the bleaching action of said bleaching product, said seat being delimited by a closed side wall and a bottom wall and being accessible at least from one front portion of the support; said bottom wall stopping at least one fluid communication between said cavity and seat.
